(19) Europäisches Patentamt
European Patent Office
Office européen des brevets

(11) **EP 3 394 157 B1**

(12) **EUROPEAN PATENT SPECIFICATION**

(45) Date of publication and mention
of the grant of the patent:
**25.09.2019 Bulletin 2019/39**

(51) Int Cl.:
*C08J 9/36* (2006.01)          *B32B 5/18* (2006.01)
*B32B 3/12* (2006.01)          *B32B 5/14* (2006.01)
*B32B 15/04* (2006.01)         *B32B 27/06* (2006.01)
*B32B 3/26* (2006.01)          *E04C 2/20* (2006.01)
*E04C 2/24* (2006.01)

(21) Application number: **16831678.4**

(22) Date of filing: **22.12.2016**

(86) International application number:
**PCT/US2016/068225**

(87) International publication number:
**WO 2017/112846 (29.06.2017 Gazette 2017/26)**

(54) **REINFORCED FOAM STRUCTURE, AND ASSOCIATED METHOD OF FORMING, AND ARTICLE**

VERSTÄRKTE SCHAUMSTRUKTUR SOWIE ZUGEHÖRIGES VERFAHREN ZUR FORMUNG UND ARTIKEL

STRUCTURE RENFORCÉE EN MOUSSE ET PROCÉDÉ DE FORMATION ASSOCIÉ, ET ARTICLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.12.2015 US 201562387141 P**

(43) Date of publication of application:
**31.10.2018 Bulletin 2018/44**

(73) Proprietor: **SABIC Global Technologies B.V.
4612 PX Bergen op Zoom (NL)**

(72) Inventors:
• **DIKEMAN, Erin M.
Pittsfield,
MA 01201 (US)**
• **KLINEDINST, Keith
Pittsfield,
MA 01201 (US)**
• **ZUBER, Peter
Pittsfield,
MA 01201 (US)**
• **TEUTSCH, Erich Otto
Richmond
Massachusetts 01254 (US)**

(74) Representative: **Balder IP Law, S.L.
Paseo de la Castellana 93
5ª planta
28046 Madrid (ES)**

(56) References cited:
**WO-A1-2015/147973          US-A- 4 898 763
US-A1- 2014 283 941**

EP 3 394 157 B1

**Description**

BACKGROUND

In vehicles having an enclosed cabin or cockpit, semi-structural panels composed of sandwich structures may be used to provide interior components such as wall surfaces, floor boards, storage compartments, etc. These panels are formed from paper glued into a honeycomb shape, and then covered with a structural and decorative skin. Additionally, panels may be formed from different materials, such as thermosetting materials and/or thermoplastic materials. U.S. Publication No. 2014/283941 describes a seamless self-insulated foam duct made from a single continuous homogenous member of polymeric foam. The foam member is further modified such that a hollow core is formed and extends along the length of the foam member. The foam surrounding the hollow core is densified, providing an air-tight layer between the hollow core and the outside environment in addition to providing acoustic and thermal insulation to the foam duct. U.S. Patent No. 4,898,763 describes a cured polyimide foam structure. International Publication No. WO 2015/147973 describes a method of embedding a fastener in a sandwich structure comprising an ordered three-dimensional microstructure core.

SUMMARY

The present inventors have recognized, among other things, that problems to be solved for a process for providing a panel can include paper tearing during an expansion process, or constituent elements of a structure being damaged during a process for obtaining a desired panel shape. As will be apparent from the present disclosure, problems and/or objectives for improvement with respect to structures incorporated in the construction of semi-structural panels, as recognized herein, may include providing a foam structure having sufficient compressive strength for aerospace and automobile applications, that is resistant to moisture absorption, and that can be formed into a desired shape easily without wasting materials.

Accordingly, aspects of the present disclosure provide possible improvements to a foam structure which may address, among others, the issues identified herein.

Another embodiment is a structure comprising: a foam body comprising a thermoplastic foam, wherein the foam body comprises a first major surface and second major surface opposite the first major surface; wherein the first major surface and the second major surface each independently define a plurality of openings, the foam body defining channels extending partially or fully through the foam body, with each channel extending from an opening in the first major surface, an opening in the second major surface, or a pair of openings, one in the first major surface and the other in the second major surface, the structure being according to claim 1.

Another embodiment is a method of forming a reinforced foam structure, the method comprising: (a) forming a plurality of channels within a foam body to form a reduced-weight foam body characterized by a compressive strength, the foam body comprising a thermoplastic material and extending from a first major surface to a second major surface opposite the first major surface; wherein each channel extends partially or fully through the foam body; and wherein each channel is defined by a channel surface; and (b) reinforcing at least a portion of the channel surfaces to form a reinforced foam structure, the reinforced foam structure having a compressive strength greater than the compressive strength of the reduced-weight foam body, the method being according to claim 4.

Another embodiment is an article comprising the structure in any of its embodiments.

This Summary is intended to provide an overview of subject matter of the present patent application. It is not intended to provide an exclusive or exhaustive explanation of the invention. The detailed description is included to provide further information about the present patent application.

BRIEF DESCRIPTION OF THE DRAWINGS

Figure 1A illustrates a schematic view of a structure, according to an aspect of the present disclosure.
Figure 1B illustrates a foam structure, according to an aspect of the present disclosure.
Figure 1C illustrates an enlarged portion of Figure 1B.
Figure 2 illustrates a schematic cross-sectional view of the foam structure of Figures 1B and 1C.
Figure 3 illustrates a schematic cross-sectional view of a reinforced foam structure, according to an aspect of the present disclosure.
Figure 4 illustrates a schematic cross-sectional view of a panel assembly, according to an aspect of the present disclosure.
Figure 5A illustrates a perspective view of the panel assembly of Figure 4.

Figure 5B illustrates an enlarged portion of Figure 5A.

Figure 6 is a flowchart illustrating a component forming method, according to an aspect of the present disclosure.

Figure 7 is a flowchart illustrating a component forming method, according to an aspect of the present disclosure.

Figure 8 illustrates a schematic cross-sectional view of a foam structure, according to an aspect of the present disclosure.

Figure 9 illustrates an interior of an aircraft, according to an aspect of the present disclosure.

Figure 10 illustrates an interior of an aircraft, according to an aspect of the present disclosure.

Figure 11 illustrates a schematic cross-sectional view of a reduced-weight, reinforced foam structure, according to an aspect of the present disclosure.

Figure 12 illustrates a schematic cross-sectional view of a reduced-weight, reinforced, skin-clad foam structure, according to an aspect of the present disclosure.

## DETAILED DESCRIPTION

Aspects of the disclosure will now be described in detail with reference to the drawings, wherein like reference numerals designate identical or corresponding parts throughout the several views, unless specified otherwise.

It is noted that as used in the specification and the appending claims the singular forms "a," "an," and "the" can include plural references unless the context clearly dictates otherwise.

Unless specified otherwise, the terms "substantial" or "substantially" as used herein mean "considerable in extent," or "largely but not necessarily wholly that which is specified."

Recitation of ranges of values herein are intended to serve as a shorthand method of referring individually to each separate value falling within the range, unless otherwise indicated herein, and each separate value is incorporated into the specification as if it were individually recited herein. All methods described herein can include routines that can be performed in any order with respect to one another to perform the method unless otherwise indicated herein or otherwise clearly contradicted by context.

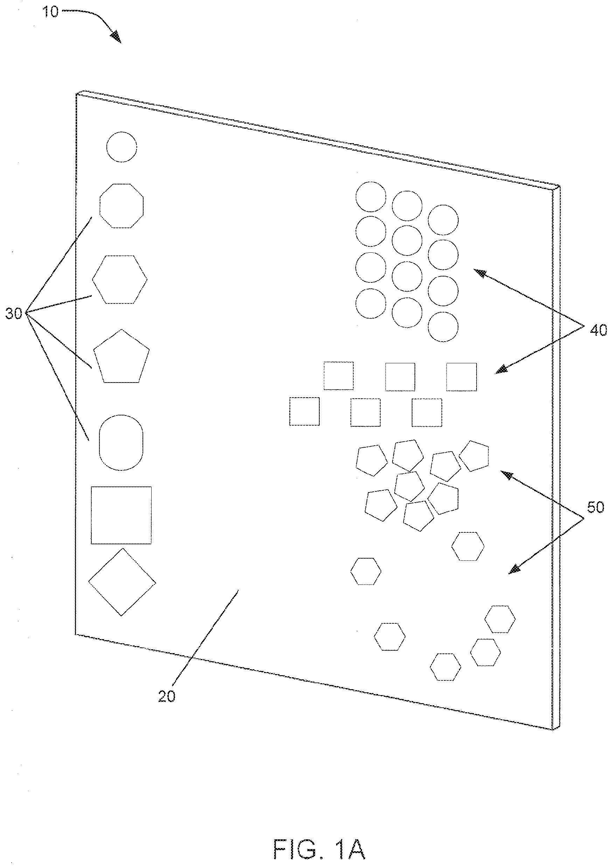

Figure 1A illustrates a schematic view of a foam structure 10, according to an aspect of the present disclosure. The foam structure 10 includes a generally planar body 20, and plurality of different types of apertures 30 formed in the body 20 in different uniform pattern arrangements 40 and non-uniform pattern arrangements 50. The foam structure 10 can include one or all of the different types of apertures 30 arranged according a single pattern, or multiple patterns. In this regard, the foam structure 10 that includes the different type of apertures 30 may further include areas without the different type of apertures 30. In one aspect, these areas without the different type of apertures 30 may form rib structures, a rib pattern, or the like. The arrangement of the different type of apertures 30, the rib structures, and/or the rib pattern may be strategically defined by the particular application intended for the foam structure 10 and the various application stresses that are contemplated for the foam structure 10.

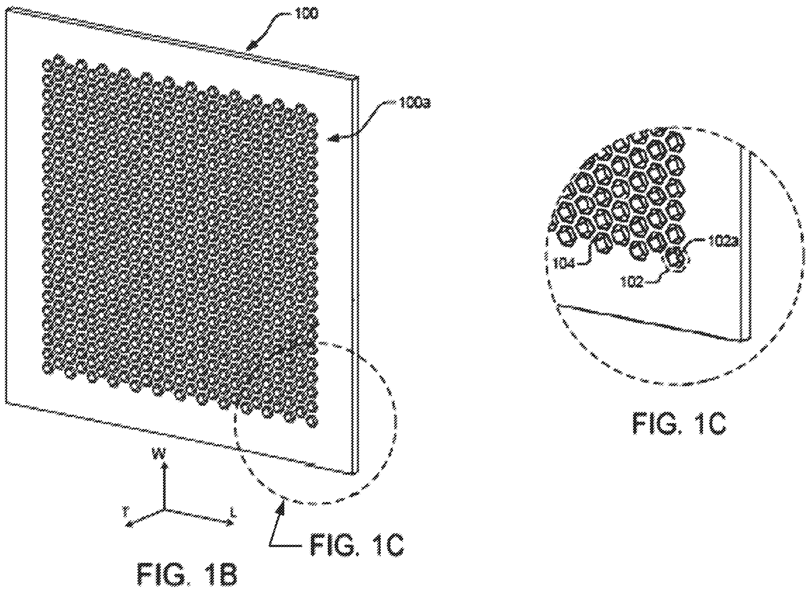

Figure 1B illustrates a foam structure 100, as one example of the foam structure 10 of Figure 1A, according to an aspect of the disclosure. A pattern of apertures 100a is formed through the foam structure 100. The foam structure 100 is formed in one piece and extends along a longitudinal direction L that is perpendicular to a first direction W, which corresponds to an elevation of the foam structure 100. A dimension along a second direction T defines a thickness of the foam structure 100, and is also perpendicular the longitudinal direction L.

Figure 1C illustrates an enlarged portion of Figure 1B, and a shows a portion of the pattern of apertures 100a. The pattern of apertures 100a may extend through the foam structure 100 along the second direction T. Each aperture 102 of the pattern of apertures 100a may be defined by aperture walls 102a extending along the second direction T from one side of the foam structure 100 and through foam structure 100 to an opposite side. Each aperture wall 102a forms a surface of a solid portion 104 extending between adjacent apertures 102. Alternatively, all or some of apertures 102 may only extend through a portion of a cross-section of the foam structure 100 along the second direction T to define recesses that open on one side of the foam structure 100.

The pattern of apertures 100a may be arranged or configured to form a honeycomb structure (e.g. a honeycomb core). The honeycomb structure may be formed by adjacent rows and columns of hexagon shaped apertures 102. The apertures 102 can be formed in other shapes, for example circles, pentagons, squares, etc., and arranged in other uniform or non-uniform patterns, as illustrated in Fig. 1A. The apertures 102 may be uniform in size or varied according to a selected pattern, which may be configured based on where material is needed versus where some material can be removed to decrease a weight of an overall foam structure. The pattern of apertures 100a may be formed into the foam structure 100 by a number of processes including, but not limited to one or more of a punching process, a water jet cutting process, a laser cutting process, a drilling process, a computer numerical control (CNC) based process, or a similar process for cutting/modifying foam structures composed of various materials.

The foam structure 100 can be formed from a thermoplastic material. The following applies to the foam structure 100 production without the apertures 102. A blowing agent may be fed into the primary extruder and mixed into the melt blend under high pressure and temperature. The melt blend may be fed under pressure to a secondary extruder, which can be used to cool a foam material formed therein and transport the foam material through a die to a calibrator to complete a formation of a foam structure. The die may operate at a specific temperature range and pressure range to provide the necessary melt strength and to suppress premature foaming in the die. The calibrator may control the cooling rate of the foam structure and, therefore, enable control over a thickness, width, and density. Alternately the foam structure 100 may be formed in their entirety using a low density foam bead injection process. In this aspect, the apertures 102 may be formed directly in a mold cavity by including aperture cores in a tool. The foam structure 100 may be molded flat with possible forming later or formed into a shape provided that aperture pins are retractable or in a line of draw. The apertures 102 may be formed as described above or alternatively, the mold may serve as a fixture by which the reinforcing process of forming the apertures 102 may be performed.

Formation of the foam structure 100 from the thermoplastic material may enable the foam structure 100 to be thermoformed into different shapes. Specifically, the foam structure 100 may be shaped during a thermoforming process from a flat shape, such as a sheet or board having a predetermined thickness, into an arcuate or a corner shape. In the case of the corner shape, the resulting shape may have two flat sections meeting at an angle of some degree, for example 90°, in a continuous manner to form a corner having a thickness substantially the same as the thickness of the foam structure 100 prior to the thermoforming process. According to an aspect of the present disclosure, the foam material 100, with or without the pattern of apertures 100a formed therein, may be thermoformed into a desired shape.

The thermoplastic material used to form the foam structure 100 may satisfy various Fire, Smoke, and Toxicity (FST) standards established by known authorities for structures utilized in various aerospace applications. For example, the thermoplastic material may meet FST requirements related to cladding and semi-structural components (e.g. panels) provided in an airplane or a helicopter.

The thermoplastic material used to form the foam structure 100 may include polyetherimide (PEI) resin such as ULTEM™ resins, available from SABIC. According to an aspect of the present disclosure, an embodiment of the foam structure 100 formed from polyetherimide foam, which may be created from polyetherimide resin, may be machined and thermoformed and/or used in vacuum bag/autoclave/oven and compression molding processes. Further, polyetherimide foam may have similar properties as other forms of polyetherimide composites, such as polyetherimide fiber based paper. As shown by Table 1, under certain conditions, polyetherimide fiber based paper has lower moisture content than other materials that may be used to form panels.
69°F = 21°C; 250°F = 121°C; 86°F = 30°C; 300°F = 149°C.

Table 1. Material Comparison for Moisture Content Percentage (%)

| PERCENT (%) MOISTURE CONTENT AT DIFFERENT CONDITIONS | | | | |
|---|---|---|---|---|
| SAMPLE | CONDITIONS | | | |
| | Ambient 69°F | Oven Dried 250°F-24 Hrs | Humidified 86°F-80%-63 Hrs | Re-dried 300°F-1.5 Hrs |
| NOMEX® 410 (3mil) | 3.797 | 3.691 | 3.961 | 3.688 |
| ULTEM™ fiber based paper (3 mil) | 3.035 | 3.006 | 3.048 | 3.011 |
| NOMEX® Crushcore® Honeycomb (1/8") | 4.303 | 4.176 | 4.444 | 4.175 |
| NOMEX® Honeycomb (1/2") | 14.402 | 14.189 | 15.129 | 14.212 |
| ULTEM™ fiber based paper (2 mil) | 2.121 | 2.042 | 2.074 | 2.046 |

Thus, incorporation of ULTEM™ foam may cause the foam structure 100 to have low moisture absorption. As a result, a need for edge filling may be reduced for a panel installed in an interior structure of a plane or a helicopter, that is at least in part, constructed with the foam structure 100 formed from ULTEM™ foam. Further, a weight, overall cost, and cost of labor to install the panel in the interior structure, may be reduced. Additional advantages may include favorable dielectric, thermal, and acoustic properties, including a noise-reduction coefficient greater than 0.3.

It will be appreciated that the foam structure 100 may be formed from other types of thermoplastic materials or from combinations other types of thermoplastic materials that may include: acrylics, nylon, fluorocarbons, polyamides, polyethylenes, polyesters, polypropylenes, polycarbonates, polyurethanes, polyetheretherketones, polyphenylene sulfides (PPS), and polyetherketoneketones.

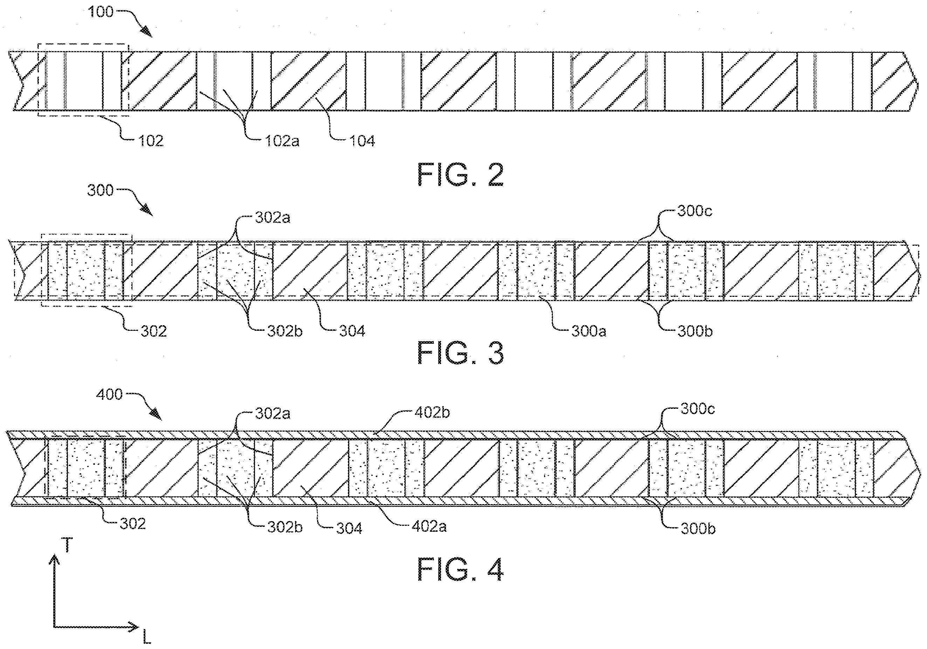

Figure 2 illustrates a schematic cross-sectional view of the foam structure 100 of Figures 1B and 1C. It will be appreciated that Figures 1B, 1C, and 2 illustrate the foam structure 100 prior to a wall reinforcing process according to the present disclosure. As such the aperture walls 102a are defined as surfaces of the solid portion 104.

Figure 3 illustrates a schematic cross-sectional view of a reinforced foam structure 300, according to an aspect of the present disclosure. The reinforced foam structure 300 includes a body 300a which is generally planar and extends from a first side 300b to a second side 300c. The first side 300b defines a first major surface, and the second side 300c defines a second major surface of the reinforced foam structure 300. Apertures 302 are formed in the body 300a extending from respective openings in the first side 300b to respective openings in the second side 300c, and thereby define a plurality of channels extending from respective openings in the first major surface to respective openings in the second major surface. Alternatively, all or some of the apertures 302 may only extend through a portion of a cross-section of the foam structure 300 to define recesses that open on the first side 300b or the second side 300c of the foam structure 300.

Each aperture 302 defined by a first wall 302a is surrounded by a second wall 304. Unlike the aperture walls 102a of the foam structure 100 illustrated in Figures 1B, 1C, and 2, at least a portion of each first wall 302a includes a structure different from a surface of the second wall 304 absent a reinforcing process. In particular, a portion of each first wall 302a includes a reinforcement wall 302b. The reinforcement wall 302b defines an inward-facing channel surface of the channel defined by a respective aperture 302. The inward-facing channel surface is thereby disposed proximal to a body material of the second wall 304 of the respective aperture 302. According to an aspect of the disclosure, and as illustrated in in Figure 3, each entire first wall 302a may be a reinforcement wall 302b. According to another aspect of the present disclosure, the reinforcement wall 302b of each aperture 302 may extend a distance from the first side 300b that is less than a distance from the first side 300b to the second side 300c.

The first wall 302a, the reinforcement wall 302b, and the second wall 304 may be formed from the same material, for example the same thermoplastic material. Due to the incorporation of the reinforcement wall 302b, the first wall 302a, although formed from the same thermoplastic material as the second wall 304, has a compressive strength greater than a compressive strength of the second wall 304. As such, for a respective aperture 302, a channel material of the inward-facing channel surface of the channel defined by the respective aperture 302a, has a compressive strength greater than a compressive strength of the body material of the second wall 304 of the respective aperture 302a. A height of each aperture 302 corresponds to a first dimension extending along a second direction T that is orthogonal to a plane of the first side 300b and a plane of the second side 300c. A thickness of each first wall 302a and a thickness of each second wall 304 correspond to a second dimension that extends parallel to the plane of the first side 300b and the plane of the second side 300c according to a respective shape of an aperture 302. A thickness of each first wall 302a/reinforcement wall 302b is less than a thickness of a corresponding portion of the second wall 304 for each aperture 302.

The reinforcement wall 302b may be defined as a portion of the first wall 302a that has been modified by an application of heat, or applications of heat and pressure, and has a physical structure different than the second wall 304. Accordingly, a density of the reinforcement wall 302b may be greater than a density of the second wall 304, and a permeability of the reinforcement wall 302b may be less than a permeability of the second wall 304. Each reinforcement wall 302b may be coated with a material having a permeability that is less than a permeability of a respective reinforcement wall 302b.

Figure 4 illustrates a schematic cross-sectional view of a panel assembly 400, according to an aspect of the present disclosure. The panel assembly 400 includes a first layer of laminate 402a adhered to the first side 300b and a second layer of laminate 402a adhered to the second side 300c of the body 300a. The first and second laminate layers (402a, 402b) may form a structural skin that may be formed from a thermoplastic, glass, carbon reinforced laminate, a thermoplastic resin, or other material. The first and second laminate layers (402a, 402b) may include an adhesive or an additional adhesive layer may be arranged thereon. The first and second laminate layers (402a, 402b) are preferably formed from a material that can be thermoformed, or more generally maintains on overall form and is not substantially difficult to bend (i.e. not stiff) when heated.

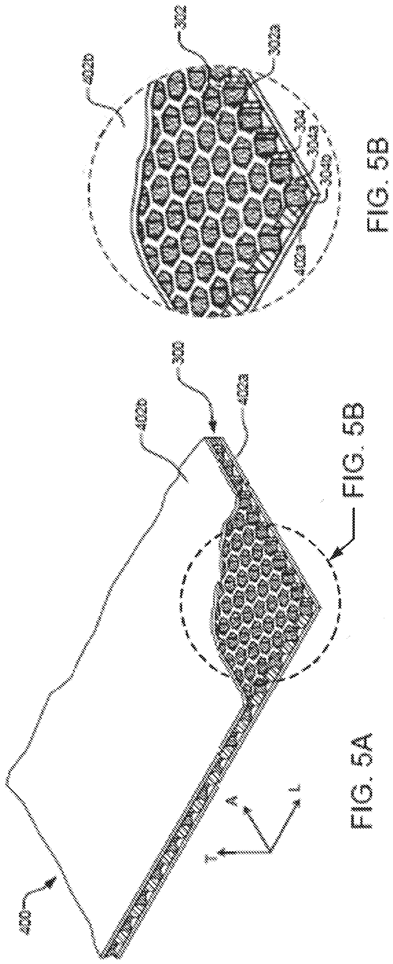

Figure 5A illustrates a perspective view of the panel assembly of Figure 4, and Figure 5B illustrates an enlarged portion of Figure 5A. Similar to the apertures of the foam structure 100 illustrated in Figures 1B, 1C, and 2, the apertures 302 of the reinforced foam structure 300 in the panel assembly 400 may be arranged in a pattern defining a honeycomb structure as illustrated in Figures 5A and 5B. Each aperture 302 is formed in the shape of a hexagon, however it will be appreciated that the apertures 302 could be any shape including a circle, a square, a pentagon, and an octagon. Due to the shape of the apertures 302 being a hexagon, each aperture includes narrow wall cross-sections 304a and wide wall cross-sections 304b as illustrated in Figure 5B.

According to an aspect of the present disclosure, a first portion of the apertures 302 may be formed in a first a shape and a second portion of the apertures 302 may be formed in a second shape different than the first shape. The arrangement of different types of shapes of the apertures 302 may be selected and implemented in order for the reinforced foam structure 300 to provide a desired level of structural support for a particular application in which the panel 400 including the reinforced foam structure 300 is incorporated. Further, different portions of the reinforced foam structure 300 may have different heights, and the first layer of laminate 402 and the second layer of layer of laminate 402b may be configured to correspond to the different heights of the reinforced foam structure 300.

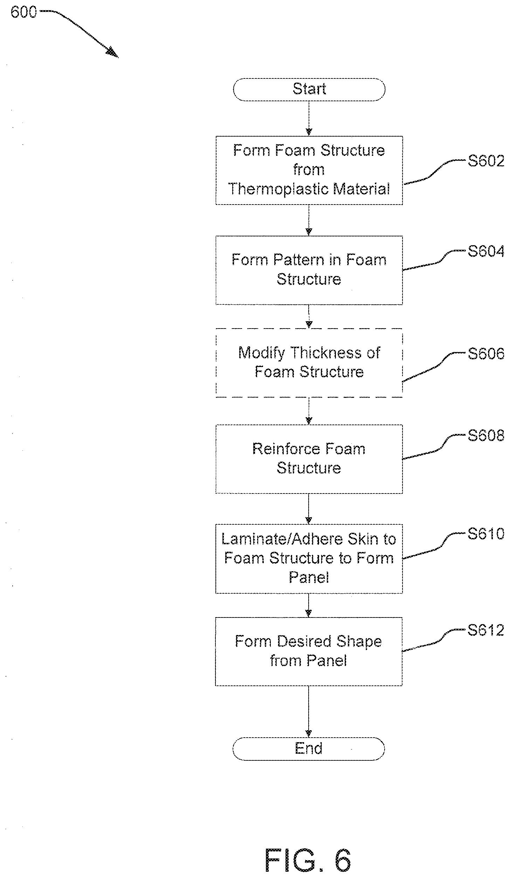

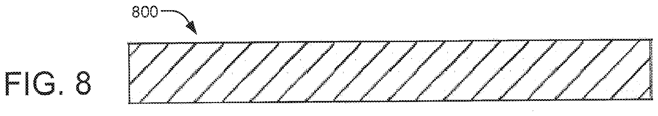

Figure 6 is a flowchart illustrating a component forming method 600, according to an aspect of the present disclosure. In step S602, an uncut and unreinforced foam structure, an example of which is illustrated in Figure 8 described in more detail below, may be formed from a thermoplastic material according to the process previously discussed for forming the foam structure 100 prior to forming the pattern of apertures 100a.

In step S604, apertures are formed in a body of the uncut and unreinforced foam structure with one or more of a water jet, a laser, a drill, a computer numerical cutting system, a punch system, or similar devices for cutting/modifying foam structures of various materials. The resulting structure is a patterned foam structure such as the foam structure 100 illustrated in Figure 2. Each aperture will be defined by a respective first wall surrounded by a respective second wall. The apertures may be formed within a body in an arrangement defining a honeycomb structure in step S604.

A thickness of the unreinforced version of the foam structure (i.e. a dimension in the second direction T) may optionally be modified at step S606.

In step S608, first walls of the patterned foam structure are modified to include reinforcement walls according to a reinforcing process. Thus, the patterned foam structure is converted into a reinforced foam structure such as the reinforced foam structure 300 illustrated in Figure 3. Accordingly, the reinforced foam structure produced in step S608 includes a body 300a, a first side 300b, a second side 300c, and apertures 302 defined by first walls 302a that include reinforcement walls 302b and are surrounded by second walls 304. A physical structure of each first wall 302a, or each first wall 302a of a selected portion of apertures 302, is permanently modified during step S608.

Step S608 includes passing a heating element, such as a heat cartridge, through each selected aperture 302. The heating element may include an outer surface that substantially corresponds to a shape defined by a respective first wall 302a (i.e. a shape of a respective aperture 302). Heat may be transmitted from the heating element to the first wall 302a, and a portion of the first wall 302a may soften or liquefy to provide a respective reinforcement wall 302b once cooled. In addition, a pressure may be applied to the first walls 302a during step S608 to modify the structure of the first walls 302a. The physical structure of the first wall 302a of each aperture 302 may be modified along the second direction T in step S608 such that the reinforcement walls 302b extend from the first side 300b to the second side 300c. It will be appreciated that the reinforcement walls 302b may extend over a distance less than a distance from the first side 300b to the second side 300c. An addition to step S608 may include a process to form the reinforcement walls 302b by melting with a solvent. Another addition to step S608 may include adding a higher density material to the inner wall with the addition of a prepolymer or tubular structure. In one aspect, heat may be applied to the first major surface and/or a second major surface of the foam structure 100 that may soften or liquefy a portion of the first major surface and/or the second major surface to provide a respective reinforcement of these surfaces once cooled. The process of heating the first major surface and/or a second major surface may increase surface density thereby increasing bonding performance to the laminate layers 402a, 402b described below.

At step S610, first and second laminate layers (402a, 402b) are attached to the reinforced foam structure 300 formed in step S608 to form a panel, such as the panel 400 illustrated in Figure 4.

Next, in step S612, the panel 400 formed in step S610 may be modified such that at least one portion of the panel 400 is orientated at an angle relative to another portion of the panel 400 to form a desired shape. For example, the panel 400 may be heated to a pliable forming temperature and formed into a specific shape in a mold (e.g. the panel may be thermoformed).

Aspects of a panel formed according to the component forming method 600 may overcome several disadvantages of other panels formed according to other methods and used in various applications, such as interior structures of airplanes and helicopters, for which certain FST requirements must to be met. For example, in step S608, an overall structural strength of the unreinforced foam structure is increased through a simple process that does not involve adding new materials which have different material properties. For example, by modifying the first walls 302a through a heating process, or a process that combines an application of heat and pressure to the unreinforced foam structure, the first walls 302a or portions thereof may transition to a softened or liquid state (e.g. melt), and cells forming respective structures of the first walls 302a may fuse together. Increasing a degree that cells are fused together in a portion of a foam structure formed from a thermoplastic material may decrease permeability, increase durability, and increase a stretch resistance of that portion of the foam structure.

Once a cooling process in step S608 is complete, a compressive strength of a first wall 302a of a given aperture 302, now with a reinforcement wall 302b of more densely configured thermoplastic material, will be higher than a compressive strength of a respective second wall 304 surrounding the first wall 302a. A collective increase in compressive strength of the first walls 302a provides the reinforced foam structure 300 with an overall strength that is improved from, for example, the unreinforced foam structure 100. Further, the overall structural strength of the reinforced foam structure 300 may be comparable to those of other structures that include other materials such as papers composed from aramid fibers.

Aramid-based honeycomb structures can be used to produce foam structures for panels used in applications for vehicles having an enclosed cabin or cockpit. However, panels formed predominantly from papers including aramid fibers, or other types of thermosetting materials, may pick up moisture easily, and increase in weight over time. In applications such as airplanes, an increase in weight of interior panels, and therefore an increase in the weight of an airplane, can result in an increase in fuel consumption and a reduction in fuel efficiency. Increased moisture pickup may also increase the risk of mold growing in the interior panels, which can be a health concern for travelers on the airplane.

To explain an advantage of reinforcing a foam structure according to the present disclosure, experimental data from compression testing of foam structures formed from ULTEM™ foam is presented in Table 2. Compression testing is used for screening core materials because sandwich panels may typically fail when bending due to the skin material buckling the core material. Each foam structure tested started from a sample of ULTEM™ foam having a starting density of 80 g/L or 110 g/L. Patterns of apertures that could be formed through a process including step S604, were formed in each foam structure. Once the pattern of apertures were formed in each foam structure, the foam structures having starting densities of 80 g/L and 110 g/L, had final densities of 49.77 g/L and 50.11 g/L, respectively. Some of the foam structures were reinforced, for example through a process including step S608, and thus included reinforcement walls such as the reinforcement walls 302b illustrated in Figures 3-5B. Each foam structure was compression tested under similar test conditions and compressive strengths of the foam structures were measured. As can be seen from Table 2, the structures including reinforcement walls had greater compressive strengths than the structures without the reinforcement walls.

Table 2. Foam Sample Compressive strength Comparison

| Sample Type (ULTEM™ Foam) | Unreinforced | Reinforced | Unreinforced | Reinforced |
|---|---|---|---|---|
| Starting Density (g/L) | 80 | 80 | 110 | 110 |
| Final Density (g/L) | 49.77 | 49.77 | 50.11 | 50.11 |
| Cell Size - diameter (mm) | 8 | 9.0-9.3 | 8 | 11.2-11.3 |
| Wall Thickness (mm) | 2.7 | 1.4-1.5 | 4.6 | 1.3-1.4 |
| Compressive strength (kPa) | 697 | 1356 | 694 | 1418 |
| Standard Deviation of Compressive strength for Reinforced Samples (kPa) | | 65 | | 37 |

Table 3 shows the commercially available densities for SABIC ULTEM™ foam products. These foams were used to make the reduced density foam structures according the concepts of the present invention. Density values, expressed in units of kilograms per cubic meter, were determined at 23 °C according to ASTM D1622-14. Compressive strength values, expressed in units of megapascals, were determined at 23 °C according to ASTM D695-15.

Table 3

| | ULTEM™ Foam Grade | | |
|---|---|---|---|
| Property | XP60 | XP80 | XP110 |
| Density (kg/m$^3$) | 60 | 60 | 110 |
| Compressive Strength (MPa) | 0.703 | 1.200 | 1.889 |

Table 4 shows that the commercially available foams can be reduced in density while achieving a higher compressive strength through the reinforcing process. The foam sheets were cut using a Computer Numerical Code (CNC) type machine to ensure the placement of the channels was precisely located according to the desired preprogrammed pattern. The honeycomb pattern allows for the most efficient packing of channels.

The formula for calculating the core density of a sheet after cutting is as follows.

$$\rho_f = \rho_i \left( 1 - \frac{\pi d^2}{2a^2\sqrt{3}} \right)$$

wherein

$\rho_f$ = core density after cutting, in units of kilograms/meter$^3$,
$\rho_i$ = initial foam density, in units of kilograms/meter$^3$,
$d$ = cutter diameter, in meters, and

$\alpha$ = center-to-center distance between nearest-neighbor apertures, in meters.

After cutting, thermal energy was applied to each channel resulting in a reinforcing effect that increases the article's compressive strength. Heat was applied to the internal walls of each of the cells by a precisely positioned and timed heating element. The heating element, obtained from McMaster-Carr as item no. 8376T27, was circular in cross-section with a diameter of 3.175 millimeters (0.125 inches) and a length of 50.8 millimeters (2 inches). It had a maximum power of 100 watts, which could be attenuated. It was positioned perpendicular to the plane of the sheet directly above the center of the channel. The heating element was then inserted into the channel at 25.4 centimeters/second (10 inches/second), until the midpoint of the heating element was aligned with the centerline of the sheet. The heating element dwelled motionless in this down position for between 0.5 and 2.0 seconds, depending on the sample identity. The heating element was then retracted and repositioned above the next channel. This ensured that consistently formed reinforcements were obtained.

Table 4 summarizes characterization of reduced density foam structures and their foam precursors. In Table 4, "Initial foam density (kg/m$^3$)" is the initial foam density in units of kilograms per cubic meter, with the initial foam being one of the Table 3 ULTEM™ Foam Grades. "Initial Aperture Diameter (m)" is the aperture (or "opening") diameter created by the cutting tool), in units of centimeters. "Center-to-center (m)" is the center-to-center distance between an aperture and its nearest neighbors, in units of meters. "Thermal Power (Watts)" is the power of the heating element, in units of watts. "Density reduction (%)" is the difference between the initial foam density and the final bulk density (after cutting and thermal treatment) divided by the initial foam density, the difference being expressed in units of percent. And "Compressive Strength (MPa)" is the compressive strength of the reduced density, reinforced foam structure, in units of megapascals, determined at 23 °C according to ASTM D695-15.

The results in Table 4, in particular the last two rows, show that the Reduced density, reinforced foams exhibit greater compressive strength per unit density than the initial foams from which they are fabricated. That means that the present method can be used to fabric articles of equivalent compressive strength but reduced weight, or equivalent weight but increased compressive strength.

Table 4.

| Sample Identification | A | B | C | D | E | F |
|---|---|---|---|---|---|---|
| Initial foam density (kg/m$^3$) | 60 | 60 | 80 | 80 | 110 | 110 |
| Initial foam compressive strength (MPa) | 0.703 | 0.703 | 1.200 | 1.200 | 1.700 | 1.700 |
| Initial aperture diameter (m) | 0.955 | 0.635 | 0.955 | 0.635 | 0.955 | 0.635 |
| Center-to-center (m) | 1.209 | 0.955 | 1.209 | 0.955 | 1.209 | 0.955 |
| Thermal power (Watts) | 70 | 70 | 75 | 75 | 80 | 80 |
| Density reduction (%) | 60 | 40 | 60 | 40 | 60 | 40 |
| Final bulk density (kg/m$^3$) | 24 | 36 | 36 | 48 | 48 | 66 |
| Reduced density, reinforced foam compressive strength (MPa) | 0.41 | 0.66 | 0.62 | 0.79 | 1.37 | 1.34 |
| (Initial foam compressive strength)/(Initial foam density) (MPa·m$^3$/kg) | 0.0117 | 0.0117 | 0.0150 | 0.0150 | 0.0154 | 0.0154 |
| (Reduced density, reinforced foam compressive strength)/(Final bulk density) (MPa·m$^3$/kg) | 0.0170 | 0.0183 | 0.0172 | 0.0165 | 0.0285 | 0.0203 |

The reduced density, reinforced foam sheets summarized in Table 4 were then fabricated into sandwich structures using a variety of skin materials, but with each sandwich structure using the same skin material on opposite sides. The reduced density, reinforced foam sheets, each having a thickness of 6 millimeters (but alternative 1 to 25.4 millimeters), were laminated on each side to each of the skin materials using a thermoplastic polyester adhesive obtained as Bostik Aerospace Flame Retardant Film Grade SH4275FA-A. The adhesive had a melt temperature below the melt temperature of either the skin or the core. The thermoplastic polyester adhesive was applied at about 40 grams per square meter. Lamination was conducted in a flat plate static press, where the sandwich structure was consolidated at a temperature of 121 °C and a pressure of 69 kilopascals for about 20 minutes.

The skin material was a composite sheet composed of 67 weight percent glass fiber with a polycarbonate matrix polymer obtained as CETEX™ TC92.5 FST (thickness 0.5 millimeters) from TenCate.

The Long Beam Bending Test is used to quantify the allowable stress in the face skins of a sandwich panel. The following test procedure is based upon ASTM C393 / C393M-16, "Standard Test Method for Core Shear Properties of Sandwich Constructions by Beam Flexure." The specimens tested were uniformly cut to 61 by 7.6 centimeters (24 by 3 inches). The skin applied to both sides of each core was a two-layer TenCate CETEX™ TC1000 polyetherimide/glass fiber laminate.

Approximate stress values in the face skins and core of the sandwich panel are given by:

$$\sigma = \frac{P(s - l)}{4t_f b\left(t_c + t_f\right)}$$

$$\tau = \frac{P}{2bt_c}$$

where

$\sigma$ = flexural stress in the face skin, in megapascals
$\tau$ = shear stress in the core, in megapascals
$P$ = total load, in Newtons
$s$ = *support span,* in millimeters
$l$ = *load span,* in millimeters
$t_f$ = *skin - facing thickness,* in millimeters
$t_c$ = *Honeycomb thickness,* in millimeters
$b$ = *specimen width*, in millimeters

Results are presented in Table 5, where "Core Density (kg/m$^3$)" is the density of the reinforced foam structure. "Flex Stress (MPa)" is the flexural stress in the whole sandwich structure, expressed in units of megapascals. "Core Shear Stress (MPa)" is the core shear stress in the whole sandwich structure, expressed in units of megapascals. "(Flex Stress)/(Core Density) (MPa·m$^3$/kg)" is the density-normalized flexural stress in units of megapascal-meter$^3$/kilogram. "(Core Shear Stress)/(Core Density) (MPa·m$^3$/kg)" is the density-normalized core shear stress in units of megapascal-meter$^3$/kilogram. The results show that the density-normalized flexural stress values and the density-normalized core shear stress values for the reduced density, reinforced foam structures with skins are not decreased compared to values corresponding unmodified foam cores.

Table 5

| Sample | A | B | C | D | E | F | XP60 | XP80 | XP110 |
|---|---|---|---|---|---|---|---|---|---|
| Core Density (kg/m³) | 24 | 36 | 36 | 48 | 48 | 66 | 60 | 80 | 110 |
| Flex Stress (MPa) | 79.23 | 87.89 | 96.43 | 93.02 | 94.49 | 96.67 | 110.45 | 164.19 | 154.90 |
| (Flex Stress)/(Core Density) (MPa·m³/kg) | 3.30 | 2.44 | 2.68 | 1.94 | 1.97 | 1.46 | 1.84 | 2.05 | 1.41 |
| Core Shear Stress (MPa) | 0.23 | 0.26 | 0.27 | 0.28 | 0.27 | 0.29 | 0.31 | 0.46 | 0.44 |
| (Core Shear Stress)/(Core Density) (MPa·m³/kg) | 0.00958 | 0.00722 | 0.00750 | 0.00583 | 0.00563 | 0.00439 | 0.00517 | 0.00575 | 0.00400 |

At the same time that an overall structural strength may be increased as a result of step S608, the reinforced foam structure 300 as a one-piece structure, or the panel 400 formed at step S610 as a combined structure, may maintain various characteristics of other structures formed from thermoplastic materials. For example, the reinforced foam structure 300 and the panel 400, which each include the reinforcement walls 302b, may still be heated to a pliable forming temperature and formed into a specific shape in a mold. Accordingly, the panel 400 may be modified in step S612 to include transitions that define angles within a wide range, such as angles between 10° and 170°. In particular, the panel 400 may be shaped to include a transition in the form of a corner that defines an angle of 90° between a first portion and a second portion of the panel 400. Due to the pliability of a thermoplastic material used in step S602, a thickness of the panel 400 for the first portion, the corner, and the second portion may be substantially constant.

From the foregoing discussion it will be appreciated that an advantage of the panel 400, as compared to a panel formed from paper composed of aramid fibers, is the panel 400 may have a comparable overall compressive strength and the apertures can be formed in any shape, while the paper based panel will be constrained to a shape dictated by a pattern of glue lines used to form a honeycomb structure. Further, the panel 400 does not have to be crushed into shape as with many thermoset materials, which involves more steps, labor, and planning than heating the panel 400 to a pliable state and molding the panel 400 to into a desired shape. For example, the panel 400 does not need to be sanded down to the extent a panel formed from thermoset material would need to be sanded. The rough nature of various thermoset materials used to form panels may require a substantial degree of labor intensive sanding, and then the panels must be sealed to prevent moisture. There is also a higher risk that constituent elements may be damaged in methods of forming components that include crushing the elements into desired shapes, than methods in which a component such as the panel 400 is shaped by a thermoforming process. Further still, some panels formed from a thermoset material, and apertures may be formed through an expansion process, not a panel in-plane expansion to create the honeycomb, and if there are any internal weak points within an original block of a honeycomb structure being expanded, tearing may occur that may propagate through the block. As a result, the entire block must be discarded.

The panel 400 may include the reinforced foam structure 300 formed from ULTEM™ foam. As previously discussed, ULTEM™ foam may absorb less moisture than other materials that may be used to form panels. Thus, the panel 400 incorporating ULTEM™ foam may absorb less moisture over time and reduce a corresponding increase in the weight over a lifecycle of the panel, than a panel formed from a different material, such as paper composed of aramid fibers or other thermoset materials. Where a panel is installed in a plane, helicopter, automobile, or other mode of transportation, an increase in weight in the panel will increase an overall weight of a respective mode of transportation in which it is installed. The increase in overall weight will in turn lead to a decrease in fuel efficiency because more power is required to move the mode of transportation. A panel formed with ULTEM™ foam according to the component forming method 600 discussed herein, may absorb less moisture and decrease a fuel efficiency of a given mode of transportation less than a panel that is not formed from an ULTEM™-based material.

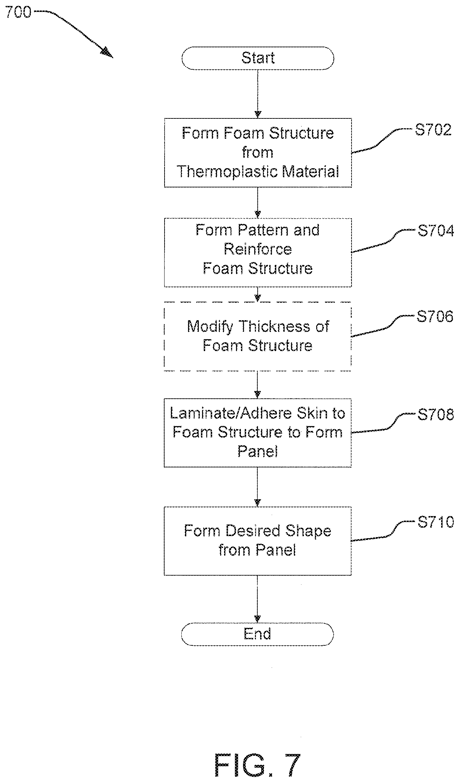

Figure 7 is a flowchart illustrating a component forming method 600, according to an aspect of the present disclosure. In step S702, an uncut and unreinforced foam structure may be formed from a thermoplastic material according to the process previously discussed for forming the foam structure 100 prior to forming the pattern of apertures 100a.

In step S704, a process of forming apertures and reinforcing the uncut and unreinforced foam structure are combined. More specifically, a punch system capable of applying heat to individual apertures formed thereby may be utilized to punch through the uncut and unreinforced foam structure, and form apertures. Punching elements of the punch system may remain within respective apertures and apply heat to first walls of the respective apertures. It will be appreciated that the punching elements may also emit heat during the cutting process in which the apertures are formed. Further, a pressure may be applied within the apertures once formed and structurally modify newly formed first walls (e.g. each punching element could expand within a respective aperture). Therefore, the punch system capable of applying heat to individual apertures not only forms the apertures in the uncut and unreinforced foam structure, but additionally heats and modifies (e.g. softens or liquefies) the physical structure of the first walls to form the reinforcement walls. The first walls/reinforcement walls are then permitted to cool and solidify in step S704. Accordingly, in step S704, the uncut and unreinforced foam structure is modified and converted into the reinforced foam structure 300 having a body 300a extending from a first side 300b to a second side 300c as illustrated in Figure 3.

A thickness of the unreinforced version of the foam structure 300 (i.e. a dimension in the second direction T) may optionally be modified at step S706.

At step S708, first and second laminate layers are attached to the reinforced foam structure 300 formed in step S708 to form a panel, such as the panel 400 illustrated in Figure 4.

Next, in step S710, the panel 400 formed in step S708 may be modified such that at least one portion of the panel 400 is orientated at an angle relative to another portion of the panel 400 to form a desired shape. For example, the panel 400 may be heated to a pliable forming temperature and formed into a specific shape in a mold (e.g. the panel may be thermoformed).

Figure 8 illustrates a schematic cross-sectional view of a foam structure 800, according to an aspect of the present disclosure. The foam structure 800 provides an example of a foam structure that has been formed from a thermoplastic material, such as the foam structure 100 illustrated in Figure 1B before a formation of the pattern of apertures 100a. The foam structure 800 may be a one-piece structure formed from any one of, or a combination of thermoplastic materials that may include: acrylics, nylon, fluorocarbons, PEI, polyamides, polyethylenes, polyesters, polypropylenes, polycarbonates, polyurethanes, polyetheretherketone, and polyetherketoneketone.

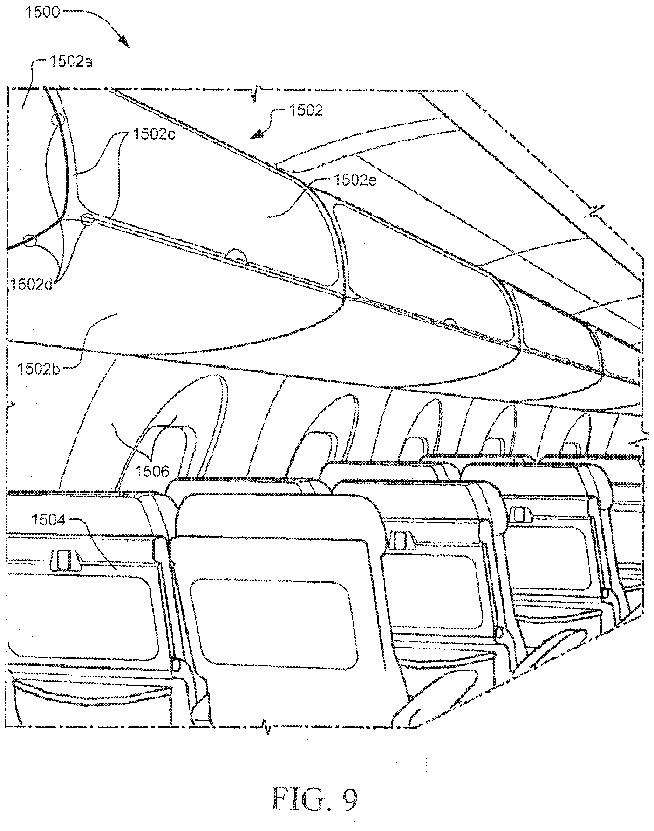

Figure 9 illustrates an interior of an aircraft 1500, according to an aspect of the present disclosure. In particular, Figure 9 illustrates an interior of an air plane 1500 including overhead containers 1502, wall panels 1504, and trays 1506 which may be constructed from panels formed according to the component forming methods described herein. The overhead container 1502 may be formed from a single panel (400, 1300) that is formed from a one-piece foam structure utilizing the component forming methods according to the present disclosure, and include a first wall 1502a, a second wall 1502b, and third wall 1502c. In particular, the panels (400, 1300) described herein can be thermoformed into complex structures including multiple transitions defining angles within a range that includes 90°. As such, a single panel (400, 1300) as described herein, may be thermoformed as one piece including transitions 1502d between the first, second, third walls (1502a, 1502b, 1502c). A door panel 1502e can be joined with the one piece including the first, second, third walls (1502a, 1502b, 1502c) to provide the overhead container 1502. The wall panels 1504 and the trays 1506 also include contoured surface features that may be provided according to the component forming methods described herein and utilizing various thermoplastic materials.

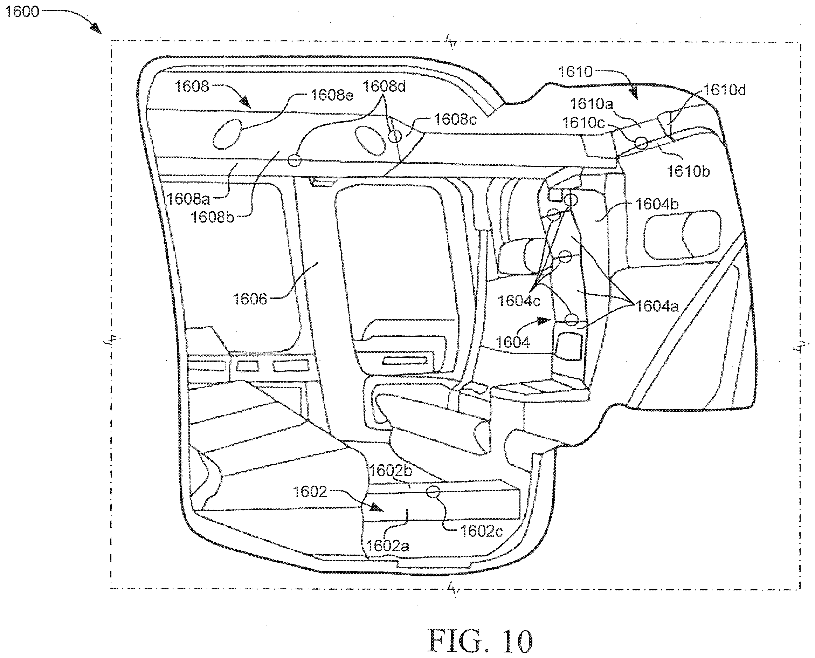

Figure 10 illustrates an interior of an aircraft 1600, according to an aspect of the present disclosure. In particular, Figure 10 illustrates an interior of a helicopter which includes a floor divider 1602, a vertical partition 1604, an interior wall surface 1606, a bulkhead 1608, and a header 1610 that may each be formed according the component forming methods of the present disclosure. The floor divider 1 602 may be formed from a single panel (400, 1300) according to the present disclosure and includes a first divider wall 1602a angled relative to a second divider wall 1602b through a divider transition 1602c which defines a substantially right angle. A thickness of the first divider wall 1602a, the second divider wall 1602b, and the corner provided by the divider transition 1602c may be the same.

The partition 1604 may be formed from a single panel (400, 1300) according to the present disclosure, and includes first partition walls 1604a that face the interior of the aircraft 1600 angled relative to one another and a second partition wall 1604b by respective partition transitions 1604c. An angle defined by the partition transition 1604c between the second partition wall 1604b and each of the first partition walls 1604a may be a right angle. In contrast, angles defined by the partition transitions 1604c between the first partition walls 1604a may range between 120° to 150° (i.e. 60° to 30° from a vertical plane of the aircraft 1600 or a plane prior to a thermoforming process of a single panel used to produce the partition 1604).

The bulkhead 1608 may be formed from a single panel (400, 1300) according to the present disclosure, and includes first, second, and third bulkhead walls (1608a, 1608b, 1608c). The first bulkhead wall 1608a may be angled relative to the second bulkhead wall 1608b by a transition 1608d defining a right angle. The third bulkhead wall 1608c may be angled relative the second bulkhead wall 1608b by another bulkhead transition 1608d defining an angle between 120° to 150° (i.e. 60° to 30° relative to a plane extending through the second bulkhead wall 1608). Any of the first, second, or third bulkhead walls (1608a, 1608b, 1608c) may include cutouts/ protruding surface features 1608e that may be formed through any of component forming methods of present disclosure.

The header 16010 may be formed from a single panel (400, 1300) according to the present disclosure, and includes a first header wall 1610a angled relative to a second header wall 1610b through a header transition 1610c which defines a substantially right angle. In addition, the second header wall 1610b may have shaped therein, a curved section 1610d between flat sections of the second header wall 1610b.

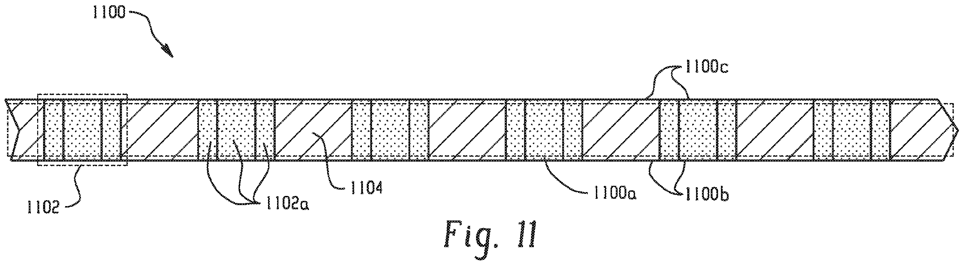

Figure 11 illustrates a schematic cross-sectional view of a reduced weight, reinforced foam structure 1100, according to an aspect of the present disclosure. The reinforced foam structure 1100 includes a foam body 1100a including connected sections of foam core 1104, the foam body 1100a extending from a first side 1100b to a second side 1100c. The first side 1100b defines a first major surface, and the second side 1100c defines a second major surface of the reinforced foam structure 1100. Channels 1102 are formed in the body 1100a extending from respective openings in the first side 1100b to respective openings in the second side 1100c, and thereby define a plurality of channels extending from respective openings in the first major surface to respective openings in the second major surface. Alternatively, all or some of the channels 1102 may only extend through a portion of a cross-section of the foam structure 1100 to define recesses that open on the first side 1100b or the second side 1100c of the foam structure 1100. The channels comprise reinforced surfaces 1102a.

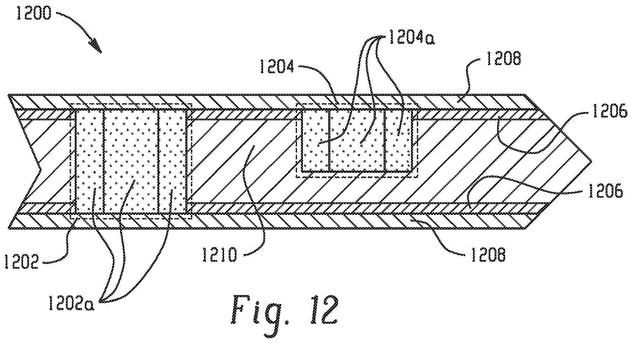

Figure 12 illustrates a schematic cross-sectional view of a skin-clad, reduced-weight, reinforced foam structure 1200, according to an aspect of the present disclosure. The structure 1200 includes a central foam core 1210 through which full channel 1202 fully extends and partial channel 1204 partially extends. The full channel 1202 comprises reinforced surfaces 1202a, and the partial channel 1204 comprises reinforced surfaces 1204a. Skin layers 1208 are attached to the top and bottom surfaces of the foam core 1210 via adhesive layers 1206.

The advantage of being able to bend a single panel in multiple directions, and to include sections angled relative to each other by acute, obtuse, or right-angles, is coupled with an increased structural strength provided by the reinforcing processes that form reinforcement walls within foam structures. Accordingly, components formed by the methods described therein may be easier to produce into complex structures as compared to other methods which involve crushing intermediate products formed from thermoset materials. Further, components produced according to the methods of the present disclosure from certain materials, such as PEI, may absorb less moisture over time than the components formed from thermoset materials. In addition, components formed with reinforcement walls according to the component forming methods of the present disclosure, may be stronger structurally that other components formed from thermoplastic materials.

One embodiment is a structure comprising: a foam body comprising a thermoplastic foam, wherein the foam body comprises a first major surface and second major surface opposite the first major surface; wherein the first major surface and the second major surface each independently define a plurality of openings, the foam body defining channels extending partially or fully through the foam body, with each channel extending from an opening in the first major surface, an opening in the second major surface, or a pair of openings, one in the first major surface and the other in the second major surface; wherein the foam body is characterized by a compressive strength; and wherein at least a portion of the channels comprise an inward-facing channel surface comprising a channel material having a compressive strength greater than the foam body compressive strength.

In some embodiments, the portion of the channels comprising an inward-facing channel surface comprising a channel material having a compressive strength greater than the foam body compressive strength is 50 to 100% of the total channels, or 80 to 100% of the total channels, or 90 to 100% of the total channels. In some embodiments, 100% of the total channels have a compressive strength greater than the foam body compressive strength.

In some embodiments the foam body, excepting voids, is chemically homogeneous. In this context, "voids" refers to voids in the foam, and does not include channels through the foam.

In some embodiments, the foam body defines channels extending partially through the foam body. In other embodiments, the foam body defines channels extending fully through the foam body.

In some embodiments, the thermoplastic foam comprises a thermoplastic selected from the group consisting of polyimides (including polyetherimides), acrylics, fluorocarbons, polyamides, poly(phenylene ether)s, poly(phenylene sulfide)s, polyethylenes, polypropylenes, polyesters (including poly(ethylene terephthalate)s), polycarbonates, polyurethanes, polyethersulfones, polyetherketones, polyetheretherketones, polyetherketoneketones, poly(vinyl chloride)s, and combinations thereof. In very specific embodiments, the thermoplastic foam comprises a polyetherimide.

In some embodiments, the foam body is characterized by a void content of 60 to 98.5 volume percent. It will be understood that the void content is defined by voids in the foam and does not include channels through the foam. Within the range of 60 to 98.5 volume percent, the void volume can be 65-95 volume percent, or 70-90 volume percent.

The structure further comprises an adhesive layer adhered to the first major surface; and a skin layer adhered to a surface of the adhesive layer opposite the first major surface.

In some embodiments, the structure further comprises an adhesive layer adhered to the second major surface, and a skin layer adhered to a surface of the adhesive layer opposite the second major surface. In such embodiments, it is preferred that the structure's two adhesive layers have the same composition, and that the structure's two skin layers have the same composition.

Examples of suitable adhesives include those comprising thermoplastic polyesters, polyurethanes, polyetheretherketones, polyetherketoneketones, polyphenylsulfones, polycarbonates, poly(phenylene sulfide)s, polyamides, and combinations thereof. In some embodiments, the adhesive layer comprises a thermoplastic polyester.

The skin layer comprises a composite comprising polyetherimide and glass fibers.

Specific examples of skin layer materials include a composite sheet composed of woven glass fiber with a polyetherimide matrix polymer; a composite sheet composed of nonwoven glass fiber with a polyetherimide matrix polymer; a composite sheet composed of carbon fiber with a polyetherimide matrix polymer. The above composite sheets can have thicknesses of 0.8 to 1.5 millimeters. Other examples of a skin material include a composite sheet composed of glass fiber with a polyetherimide matrix polymer obtained, for example, as CETEX™ TC1000 (thickness 1 or 2 millimeters) from TenCate.

In the structure, the thermoplastic foam comprises a polyetherimide, the foam body is characterized by a void content of 65 to 95 volume percent, the foam body further comprises an adhesive layer adhered to the first major surface, and a skin layer adhered to a surface of the adhesive layer opposite the first major surface, and the skin layer comprises a composite comprising a polyetherimide and glass fibers.

Another embodiment is a method of forming a reinforced foam structure, the method comprising: (a) forming a plurality of channels within a foam body to form a reduced-weight foam body characterized by a compressive strength, the foam body comprising a thermoplastic material and extending from a first major surface to a second major surface opposite the first major surface; wherein each channel extends partially or fully through the foam body; and wherein each channel is defined by a channel surface; and (b) reinforcing at least a portion of the channel surfaces to form a reinforced foam structure, the reinforced foam structure having a compressive strength greater than the compressive strength of the reduced-weight foam body.

In some embodiments, the portion of channel surfaces reinforced is 50 to 100 (number) percent, or 80 to 100 percent, or 90 to 100 percent. In some embodiments, 100 percent of the channel surfaces are reinforced.

In the method, the foam body comprises a polyetherimide; the foam body is characterized by a void content of 65 to 95 volume percent; the reinforced foam structure further comprises an adhesive layer adhered to the first major surface, and a skin layer adhered to a surface of the adhesive layer opposite the first major surface; the skin layer comprises a composite comprising a polyetherimide and glass fibers; and said reinforcing at least a portion of the channel surfaces comprises passing a heating element through the channels defined by the at least a portion of the channel surfaces.

In some embodiments, the reinforced foam structure further comprises an adhesive layer adhered to the second major surface, and a skin layer adhered to a surface of the adhesive layer opposite the second major surface. In such embodiments, it is preferred that the structure's two adhesive layers have the same composition, and that the structure's two skin layers have the same composition.

Another embodiment is an article comprising the structure of any of the above-described embodiments. Examples of such articles are aviation overhead containers, aviation interior wall panels, and aviation trays.

Another embodiment is a structure comprising: a generally planar body formed at least from a thermoplastic foam, the general planar body comprising a first major surface and second major surface opposite the first major surface, with each major surface defining a plurality of openings, the generally planar body defining channels extending there through, with each channel of at least a portion of the channels extending from an opening in the first major surface to an opening in the second major surface, wherein each channel of the portion of the channels includes an inward-facing channel surface comprising a channel material of a first compressive strength, with the channel material disposed proximal to a body material of a second compressive strength that is lower than the first compressive strength.

The thermoplastic foam comprises polyetherimide.

In some embodiments of the structure, at least channels of the portion of the channels are arranged in a pattern defining a honeycomb structure.

In some embodiments of the structure, the generally planar body includes portions without the channels.

In some embodiments of the structure, a first dimension of each channel of the portion of the channels extends along a first axis that is orthogonal to a plane of the first major surface and a plane of the second major surface; a second dimension of each channel of the portion of the channels extends along a second axis that is parallel to the plane of the first major surface and the plane of the second major surface; and a second dimension of an inward-facing channel surface of at least one channel of the portion of the channels is less than a second dimension of a body material the inward-facing channel surface is disposed proximal to.

Another embodiment is a method of forming a panel, the method comprising the processes of: (a) forming a foam structure at least from a thermoplastic material with a body extending from a first side to a second side; (b) forming a plurality of apertures within the body, at least one aperture defined by a first wall surrounded by a second wall; and (c) forming at least one reinforcement wall from at least a portion of the first wall, wherein the reinforcement wall is formed from the thermoplastic material and has a first compressive strength, and wherein at least a portion of the second wall is formed from the thermoplastic material and has a second compressive strength different than the first compressive strength.

In some embodiments of the method, process (b) includes one of cutting the plurality of apertures in the body with one or more of a water jet, a laser, a drill, a computer numerical cutting system, a bead injection process and a punch system.

It will be appreciated that the present disclosure may include any one and up to all of the following examples.

Example 1. A foam structure formed at least from a thermoplastic material, the foam structure comprising: a first side; a second side; and a body that extends from the first side to the second side and defines a plurality of apertures, wherein each aperture of the plurality of apertures is respectively defined by a first wall and a second wall surrounding the first wall, wherein each first wall includes a reinforcement wall that is formed from the thermoplastic material and has a first compressive strength, and wherein at least a portion of each second wall is formed from the thermoplastic material and has a second compressive strength less than the first compressive strength.

Example 2. The foam structure as recited in example 1, wherein a respective reinforcement wall of each aperture of at least a portion of the plurality of apertures extends from the first side to the second side.

Example 3. The foam structure as recited in example 1, wherein a respective reinforcement wall of each aperture of at least a portion of the plurality of apertures extends a distance from the first side that is less than a distance from the first side to the second side.

Example 4. The foam structure as recited in example 1, wherein a plane extends through the foam structure between and parallel to the first side and the second side, wherein each reinforcement wall extends a respective first distance from the plane towards the first side that is less than a distance from the plane to the first side and extends a respective second distance from the plane towards the second side that is less than a distance from the plane to the second side.

Example 5. The foam structure as recited in any one of examples 1 to 4, wherein a height of each aperture of the plurality of apertures corresponds to a first dimension extending along a first axis that is orthogonal to a plane of the first side and a plane of the second side, wherein a thickness of each first wall and a thickness of each second wall correspond to a second dimension extending along a second axis that is parallel to the plane of the first side and the plane of the second side, and wherein a thickness of the reinforcement wall is less than a thickness of the portion of the second wall for each aperture of the plurality of apertures.

Example 6. The foam structure as recited in example 5, wherein each aperture of a first portion of the plurality of apertures has a first height, and wherein each aperture of a second portion of the plurality of apertures has a second height different than the first height.

Example 7. The foam structure as recited in any one of examples 1 to 6, wherein the thermoplastic material is a thermoplastic foam.

Example 8. The foam structure as recited in example 7, wherein the thermoplastic foam is formed from polyetherimide.

Example 9. The foam structure as recited in example 7, wherein a plurality of fibers are dispersed throughout the body.

Example 10. The foam structure as recited in example 9, wherein the fibers are formed from a material different from the thermoplastic material.

Example 11. The foam structure as recited in any one of examples 9 and 10, further comprising: a first layer of one of a thermoset material and an adhesive material adhered to the first side of the body, and a second layer of one of the thermoset material and the adhesive material adhered to the second side of the body, wherein the one of the thermoset material and the adhesive material attach the thermoplastic foam to the plurality of fibers.

Example 12. The foam structure as recited in any one of examples 1 to 11, further comprising a layer of laminate adhered to at least one of the first side and the second side of the body.

Example 13. The foam structure as recited in any one of examples 1 to 11, further comprising: a first layer of laminate adhered to the first side of the body, and a second layer of laminate adhered to the second side of the body.

Example 14. The foam structure as recited in any one of examples 1 to 13, wherein a density of the reinforcement wall is greater than a density of the portion of the second wall for each aperture of the plurality of apertures.

Example 15. The foam structure as recited in any one of examples 1 to 14, wherein a permeability of the reinforcement wall is less than a permeability of the portion of the second wall for each aperture of the plurality of apertures.

Example 16. The foam structure as recited in example 15, wherein each reinforcement wall is coated with a material having a permeability that is less than a permeability of a respective reinforcement wall.

Example 17. The foam structure as recited in any one of examples 1 to 16, wherein the plurality of apertures are arranged in a pattern defining a honeycomb structure.

Example 18. The foam structure as recited in example 17, wherein each aperture of the plurality of apertures is formed in a shape of one of a circle, a square, a pentagon, a hexagon, and an octagon.

Example 19. The foam structure as recited in example 17, wherein each aperture of a first portion of the plurality of apertures is formed in a first shape of one of a circle, a square, a pentagon, a hexagon, and an octagon, and wherein each aperture of a second portion of the plurality of apertures is formed in a second shape different than the first shape.

Example 20. A panel arrangement configured to be installed in an aircraft, the panel arrangement comprising: a first external wall; a second external wall; and a first transition structure positioned between the first external wall and the second external such that the second external wall is one of orientated at a first angle relative to the first external wall and has a thickness different from a thickness of the first external wall, wherein the first external wall, the second external wall, and the first transition structure are formed by a one-piece foam structure and at least a first layer of laminate attached to a first side of the one-piece foam structure, wherein the one-piece foam structure includes at a first internal wall and a second internal wall formed from a thermoplastic material, and wherein the first internal wall is positioned adjacent to the second internal wall and has a compressive strength different from a compressive strength of the second internal wall.

Example 21. The panel arrangement as recited in example 20, wherein the second external wall is orientated by the first transition structure at the first angle relative to the first external wall, and wherein a thickness of the first external wall is equal to a thickness of the second external wall.

Example 22. The panel arrangement as recited in any one of examples 21, further comprising: a third external wall; and a second transition structure positioned between the first external wall and the third external wall such that the third external wall is orientated at a second angle relative to the first internal wall, wherein the third external wall and the first transition structure are formed by the one-piece foam structure.

Example 23. The panel arrangement as recited in example 22, wherein the second angle is within a range of 120° to 150°.

Example 24. The panel arrangement as recited in any one of examples 22 and 23, wherein the third external wall is orientated at the first angle relative to the second internal wall.

Example 25. The panel arrangement as recited in any one of examples 21 to 24, wherein the first angle is equal to 90°.

Example 26. The panel arrangement as recited in any one of examples 21 to 24, wherein the first angle is within a range of 120° to 150°.

Example 27. The panel arrangement as recited in any one of examples 21 to 26, wherein the first external wall includes a curved portion positioned between a first flat portion and a second flat portion, and wherein the first flat portion and the second flat portion are orientated at the first angle relative to the second external wall.

Example 28. The panel arrangement as recited in any one of examples 20 to 27, wherein the thermoplastic material is a thermoplastic foam.

Example 29. The panel arrangement as recited in example 28, wherein the thermoplastic foam is formed from polyetherimide.

Example 30. The panel arrangement as recited in any one of examples 20 to 29, further comprising a second layer of laminate attached to a second side of the one-piece foam structure.

Example 31. The panel arrangement as recited in example 28, wherein a plurality of fibers are dispersed throughout the one-piece foam structure.

Example 32. The panel arrangement as recited in example 31, wherein the fibers are formed from a material different from the thermoplastic material.

Example 33. The panel arrangement as recited in any one of examples 31 and 32, further comprising: a first layer of one of a thermoset material and an adhesive material adhered to the first side of the one-piece foam structure between first side and the first layer of laminate, and a second layer of one of the thermoset material and the adhesive material adhered to the second side of the body, wherein the one of the thermoset material and the adhesive material attach the thermoplastic foam to the plurality of fibers.

Example 34. The panel arrangement as recited in example 33, further comprising a second layer of laminate attached to the second layer of one of the thermoset material and the adhesive material.

Example 35. The panel arrangement as recited in any one of examples 20 to 35, wherein the first internal wall defines an aperture within a body of the one-piece foam structure and includes a reinforcement wall that is formed from the thermoplastic material and has a first compressive strength, and wherein the second internal wall surrounds the first internal, is formed from the thermoplastic material, and has a second compressive strength less than the first compressive strength.

Example 36. The panel arrangement as recited in example 35, wherein a height of the aperture corresponds to a first dimension extending along a first axis that is orthogonal to a plane of the first side of the one-piece foam structure, wherein a thickness of the first internal wall and a thickness of the second internal wall correspond to a second dimension extending along a second axis that is parallel to the plane of the first side, and wherein the thickness of the reinforcement wall is less than the thickness of the second wall.

Example 37. The panel arrangement as recited in any one of examples 35 to 36, wherein a density of the reinforcement wall is greater than a density of the second wall.

Example 38. The panel arrangement as recited in any one of examples 35 to 37, wherein a permeability of the reinforcement wall is less than a permeability of the second wall.

Example 39. The panel arrangement as recited in example 38, wherein the reinforcement wall is coated with a material having a permeability that is less than a permeability of the reinforcement wall.

Example 40. The panel arrangement as recited in any one of examples 35 to 39, wherein the aperture is one of a plurality of apertures defined by the one-piece foam structure which are arranged in a pattern defining a honeycomb structure.

Example 41. The foam structure as recited in example 40, wherein each aperture of the plurality of apertures is formed in a shape of one of a circle, a square, a pentagon, a hexagon, and an octagon.

Example 42. A method of forming a panel, the method comprising processes: (a) forming a foam structure to include a body extending from a first side to a second side and formed at least from a thermoplastic material; (b) forming a plurality of apertures within the body, each aperture defined by a respective first wall surrounded by a respective second wall; and (c) forming reinforcement walls, each reinforcement wall being formed from at least a portion of a respective first wall; wherein each reinforcement wall is formed from the thermoplastic material and has a first compressive strength, and wherein at least a portion of each second wall is formed from the thermoplastic material and has a second compressive strength less than the first compressive strength.

Example 43. The method of example 42, further comprising adjusting a thickness of a portion of the foam structure after process (a) and before process (c).

Example 44. The method of any one of examples 42 and 43, wherein process (c) includes permanently modifying a physical structure of a first wall of each aperture of at least a portion of the plurality of apertures.

Example 45. The method of any one of examples 42 to 44, wherein process (b) includes one of cutting the plurality of apertures in the body with one or more of a water jet, a laser, a drill, a computer numerical cutting system, a bead injection process and a punch system.

Example 46. The method of example 45, wherein process (c) includes: (c1) passing a heating element through each aperture of the portion of the plurality of apertures such that each heating element includes an outer surface that substantially corresponds to a shape of a first wall of a respective aperture, (c2) applying heat to the first wall of each aperture with a respective heating element such that at least a portion of the first wall melts, (c3) allowing the first wall of each aperture to cool and solidify.

Example 47. The method of any one of examples 42 to 44, wherein process (c) is combined with process (b) and process (b) includes: (b1) cutting the plurality of apertures in the body with a punch system and applying heat as the plurality of apertures are cut to the first wall of each aperture of the portion of the plurality of apertures such that at least a portion of the first wall melts, and (b2) allowing the first wall of each aperture to cool and solidify.

Example 48. The method of any one of examples 45 to 47, wherein the physical structure of the first wall of each aperture of the portion of the plurality of apertures is modified from the first side to the second side of the foam structure.

Example 49. The method of any one of examples 45 to 47, wherein a plane extends through the foam structure between and parallel to the first side and the second side, wherein the physical structure of the first wall of each aperture of the portion of the plurality of apertures is modified over a first distance from the plane towards the first side that is less than a distance from the plane to the first side and over a second distance from the plane towards the second side that is less than a distance from the plane to the second side.

Example 50. The method of any one of examples 42 to 49, wherein process (b) includes forming the plurality of apertures within the body in an arrangement defining a honeycomb structure.

Example 51. The method of any one of examples 42 to 50, further comprising a process (d) of attaching a first laminate layer to the first side and attaching a second laminate layer to the second side of the foam structure.

Example 52. The method of any one of examples 42 to 51, wherein the thermoplastic material is a thermoplastic foam formed from polyetherimide.

Example 53. The method of example 49, wherein process (a) includes punching fibers through the body of the foam structure.

Example 54. The method of example 53, wherein the thermoplastic material is a thermoplastic foam formed from polyetherimide and the fibers are formed from a material different that the thermoplastic material.

Example 55. The method of any one of examples 53 to 54, wherein process (b) includes forming the plurality of apertures within the body in an arrangement defining a honeycomb structure.

Example 56. The method of any one of examples 53 and 55, further comprising a process (d) of consolidating the foam structure with one of a thermoset material and an adhesive and attaching the fibers to the thermoplastic foam.

Example 57. The method of example 56, further comprising a process (e) of attaching the first laminate layer and the second laminate layer to the second side of the foam structure.

Example 58. The method of example 51 or 57, further comprising a process following the attaching of the first laminate layer and the second laminate layer of thermoforming the panel, wherein the panel is thermoformed to include: a first external wall, a second external wall, and a first transition structure positioned between the first external wall and the second external such that the second external wall is orientated at a first angle relative to the first external wall.

Example 59. The method of example 58, wherein the panel is thermoformed to include: a third external wall, and a second transition structure positioned between the first external wall and the third external wall such that the third external wall is orientated at a second angle relative to the first internal wall.

Example 60. The method of example 59, wherein the second angle is within a range of 120° to 150°.

Example 61. The method of any one of examples 59 and 60, wherein the third external wall is orientated at the first angle relative to the second external wall.

Example 62. The method of any one of examples 59 to 61, wherein the first angle is equal to 90°.

Example 63. The method of any one of examples 59 to 61, wherein the first angle is within a range of 120° to 150°.

Example 64. The method of any one of examples 59 to 63, wherein the first external wall includes a curved portion positioned between a first flat portion and a second flat portion, and wherein the first flat portion and the second flat portion are orientated at the first angle relative to the second external wall.

Example 65. A structure comprising: a generally planar body comprising a first major surface and second major surface opposite the first major surface, with each major surface defining a plurality of openings, the generally planar body defining channels extending there through, with each channel of at least a portion of the channels extending from an opening in the first major surface to an opening in the second major surface, wherein each channel of the portion of the channels includes an inward-facing channel surface comprised of a channel material of a first compressive strength, with the channel material disposed proximal to a body material of a second compressive strength that is lower than the first compressive strength.

Example 66. The structure as recited in example 65, wherein the generally planar body is formed at least from a thermoplastic material, with the thermoplastic material being a thermoplastic foam.

Example 67. The foam structure as recited in example 66, wherein a plurality of fibers are dispersed throughout the generally planar body.

Example 68. The foam structure as recited in example 67, further comprising: a first layer of one of a thermoset material and an adhesive material adhered to the first major surface of the generally planar body, and a second layer of one of the thermoset material and the adhesive material adhered to the second surface of the generally planar body, wherein the one of the thermoset material and the adhesive material attach the thermoplastic foam to the plurality of fibers.

Example 69. The structure as recited in any one of Examples 65 to 68, wherein a first dimension of each channel of the portion of the channels extends along a first axis that is orthogonal to a plane of the first major surface and a plane of the second major surface, wherein a second dimension of each channel of the portion of the channels extends along a second axis that is parallel to the plane of the first major surface and the plane of the second major surface, and wherein a second dimension of an inward-facing channel surface of at least one channel of the portion of the channels is less than a second dimension of a body material the inward-facing channel surface is disposed proximal to.

Example 70. A panel comprising: a first external wall; a second external wall; and a first transition structure positioned between the first external wall and the second external, the second external wall extends at a first angle relative to the first external wall or a first dimension of the second external wall along a first direction is different than a first dimension of the first external wall along the first direction, wherein the first external wall, the second external wall, and the first transition structure are formed by a one-piece foam structure and at least a first layer of laminate attached to a first side of the one-piece foam structure, wherein the one-piece foam structure includes at a first internal wall and a second internal wall formed from a thermoplastic material, and wherein the first internal wall is positioned adjacent to the second internal wall and has a first compressive strength different than a second compressive strength of the second internal wall.

Example 71. The panel as recited in Example 70, wherein the second external wall is orientated by the first transition structure at the first angle relative to the first external wall, and wherein the first dimension of the first external wall is equal to the first dimension of the second external wall.

Example 72. The panel as recited in Example 71, wherein the first angle is equal to 90°.

Example 73. A method of forming a panel, the method comprising the processes of: (a) forming a foam structure at least from a thermoplastic material with a body extending from a first side to a second side; (b) forming a plurality of apertures within the body, at least one aperture defined by a first wall surrounded by a second wall; and (c) forming at least one reinforcement wall from at least a portion of the first wall, wherein the reinforcement wall is formed from the thermoplastic material and has a first compressive strength, and wherein at least a portion of the second wall is formed from the thermoplastic material and has a second compressive strength different than the first compressive strength.

Example 74. A structure comprising: a foam body comprising a thermoplastic foam, wherein the foam body comprises a first major surface and second major surface opposite the first major surface; wherein the first major surface and the second major surface each independently define a plurality of openings, the foam body defining channels extending partially or fully through the foam body, with each channel extending from an opening in the first major surface, an opening in the second major surface, or a pair of openings, one in the first major surface and the other in the second major surface; wherein the foam body is characterized by a compressive strength; and wherein at least a portion of the channels comprise an inward-facing channel surface comprising a channel material having a compressive strength greater than the foam body compressive strength.

Example 75. The structure of Example 74, wherein the foam body defines channels extending partially through the foam body.

Example 76. The structure of Example 74, wherein the foam body defines channels extending fully through the foam body.

Example 77. The structure of any one of Examples 74-76, wherein the thermoplastic foam comprises a thermoplastic selected from the group consisting of polyimides, acrylics, fluorocarbons, polyamides, poly(phenylene etheris, poly(phenylene sulfide)s, polyethylenes, polypropylenes, polyesters, polycarbonates, polyurethanes, polyethersulfones, polyetherketones, polyetheretherketones, polyetherketoneketones, poly(vinyl chloride)s, and combinations thereof.

Example 78. The structure of any one of Examples 74-76, wherein the thermoplastic foam comprises a polyetherimide.

Example 79. The structure of any one of Examples 74-78, wherein the foam body is characterized by a void content of 60 to 98.5 volume percent.

Example 80. The structure of any one of Examples 74-79, further comprising an adhesive layer adhered to the first major surface; and a skin layer adhered to a surface of the adhesive layer opposite the first major surface.

Example 81. The structure according to Example 80, wherein the skin layer comprises a material selected from the group consisting of aluminum, aluminum alloys, polyetherimides, polycarbonates, polypropylenes, polyetherimide/glass fiber composites, polyetherimide/carbon fiber composites, polycarbonate/glass fiber composites, polycarbonate/carbon fiber composites, and polypropylene/glass fiber composites.

Example 82. The structure according to Example 80 or 81, wherein the skin layer comprises a polyetherimide/glass fiber composite.

Example 83. The structure according to Example 74, wherein the thermoplastic foam comprises a polyetherimide; the foam body is characterized by a void content of 65 to 95 volume percent; the foam body further comprises an adhesive layer adhered to the first major surface, and a skin layer adhered to a surface of the adhesive layer opposite the first major surface; and the skin layer comprises a composite comprising a polyetherimide and glass fibers.

Example 84: A method of forming a reinforced foam structure, the method comprising: (a) forming a plurality of channels within a foam body to form a reduced-weight foam body characterized by a compressive strength, the foam body comprising a thermoplastic material and extending from a first major surface to a second major surface opposite the first major surface; wherein each channel extends partially or fully through the foam body; and wherein each channel is defined by a channel surface; and (b) reinforcing at least a portion of the channel surfaces to form a reinforced foam structure, the reinforced foam structure having a compressive strength greater than the compressive strength of the reduced-weight foam body.

Example 85: The method of claim 84, wherein the foam body comprises a polyetherimide; the foam body is characterized by a void content of 65 to 95 volume percent; the reinforced foam structure further comprises an adhesive layer adhered to the first major surface, and a skin layer adhered to a surface of the adhesive layer opposite the first major surface; the skin layer comprises a composite comprising a polyetherimide and glass fibers; and said reinforcing at least a portion of the channel surfaces comprises passing a heating element through the channels defined by the at least a portion of the channel surfaces.

Example 86: An article comprising the structure of any one of Examples 74-85.

Example 87: A structure comprising: a generally planar body formed at least from a thermoplastic foam, the general planar body comprising a first major surface and second major surface opposite the first major surface, with each major surface defining a plurality of openings, the generally planar body defining channels extending there through, with each channel of at least a portion of the channels extending from an opening in the first major surface to an opening in the second major surface, wherein each channel of the portion of the channels includes an inward-facing channel surface comprising a channel material of a first compressive strength, with the channel material disposed proximal to a body material of a second compressive strength that is lower than the first compressive strength.

Example 88: The structure of Example 87, wherein the thermoplastic foam comprises a thermoplastic selected from the group consisting of polyetherimides, acrylics, fluorocarbons, polyamides, polyethylenes, polyesters, polypropylenes, polycarbonates, polyurethanes, polyetheretherketones, polyphenylene sulfides, and polyetherketoneketones.

Example 89: The structure of Example 87, wherein the thermoplastic foam comprises polyetherimide.

Example 90: The structure of any one of Examples 87-89, wherein at least channels of the portion of the channels are arranged in a pattern defining a honeycomb structure.

Example 91: The structure according to any one of Examples 87-90, wherein the generally planar body includes portions without the channels.

Example 92: A method of forming a panel, the method comprising the processes of: (a) forming a foam structure at least from a thermoplastic material with a body extending from a first side to a second side; (b) forming a plurality of apertures within the body, at least one aperture defined by a first wall surrounded by a second wall; and (c) forming at least one reinforcement wall from at least a portion of the first wall, wherein the reinforcement wall is formed from the thermoplastic material and has a first compressive strength, and wherein at least a portion of the second wall is formed from the thermoplastic material and has a second compressive strength different than the first compressive strength.

Example 93: The method of Example 92, wherein process (b) includes one of cutting the plurality of apertures in the body with one or more of a water jet, a laser, a drill, a computer numerical cutting system, a bead injection process and a punch system.

**Claims**

1. A structure comprising:

    a foam body comprising a thermoplastic foam comprising a polyetherimide, wherein the foam body comprises a first major surface and second major surface opposite the first major surface;
    wherein the first major surface and the second major surface each independently define a plurality of openings, the foam body defining channels extending partially or fully through the foam body, with each channel extending from an opening in the first major surface, an opening in the second major surface, or a pair of openings, one in the first major surface and the other in the second major surface;
    wherein at least a portion of the channels comprise an inward-facing channel surface reinforced by passing a heating element through the channels comprising the inward-facing channel surface;
    wherein the structure is **characterized by** a compressive strength greater than a compressive strength of the structure prior to passing the heating element through the channels comprising the inward-facing channel surface, wherein compressive strength is determined according to ASTM D695-15;

wherein the foam body is **characterized by** a void content of 65 to 95 volume percent, wherein the void content does not include the channels through the foam body;

the foam body further comprises an adhesive layer adhered to the first major surface, and a skin layer adhered to a surface of the adhesive layer opposite the first major surface; and

the skin layer comprises a composite comprising a polyetherimide and glass fibers.

2. The structure of claim 1, wherein the foam body defines channels extending partially through the foam body.

3. The structure of claim 1, wherein the foam body defines channels extending fully through the foam body.

4. A method of forming a reinforced foam structure, the method comprising:

(a) forming a plurality of channels within a foam body to form a reduced-weight foam body **characterized by** a compressive strength, the foam body comprising a thermoplastic material and extending from a first major surface to a second major surface opposite the first major surface; wherein each channel extends partially or fully through the foam body; and wherein each channel is defined by a channel surface; and
(b) reinforcing at least a portion of the channel surfaces to form a reinforced foam structure,

wherein the reinforced foam structure is **characterized by** a compressive strength greater than the compressive strength of the reduced-weight foam body prior to passing the heating element through the channels, wherein compressive strength is determined according to ASTM D695-15; and
wherein
the foam body comprises a polyetherimide;
the foam body is **characterized by** a void content of 65 to 95 volume percent, wherein the void content does not include the channels through the foam body;
the reinforced foam structure further comprises an adhesive layer adhered to the first major surface, and a skin layer adhered to a surface of the adhesive layer opposite the first major surface;
the skin layer comprises a composite comprising a polyetherimide and glass fibers; and
said reinforcing at least a portion of the channel surfaces comprises passing a heating element through the channels defined by the at least a portion of the channel surfaces.

5. An article comprising the structure of any one of claims 1-3.

**Patentansprüche**

1. Eine Struktur, umfassend:

einen Schaumkörper, umfassend einen thermoplastischen Schaum, welcher ein Polyetherimid umfasst, wobei der Schaumkörper eine erste Hauptoberfläche und eine zweite Hauptoberfläche gegenüber der ersten Hauptoberfläche aufweist;
wobei die erste Hauptoberfläche und die zweite Hauptoberfläche jeweils unabhängig voneinander eine Mehrzahl an Öffnungen definieren, wobei der Schaumkörper Kanäle, welche sich teilweise oder vollständig durch den Schaumkörper erstrecken, definiert, wobei jeder Kanal sich von einer Öffnung in der ersten Hauptoberfläche, einer Öffnung in der zweiten Hauptoberfläche, oder einem Paar von Öffnungen, wobei eine in der ersten Hauptoberfläche und die andere in der zweiten Hauptoberfläche ist, erstreckt;
wobei wenigstens ein Teil der Kanäle eine nach innen gerichtete Kanaloberfläche aufweist, welche durch Durchführen eines Heizelements durch die die nach innen gerichtete Kanaloberfläche aufweisenden Kanäle verstärkt ist;
wobei die Struktur sich durch eine Druckfestigkeit auszeichnet, welche höher ist als eine Druckfestigkeit der Struktur vor dem Durchführen des Heizelements durch die die nach innen gerichtete Kanaloberfläche aufweisenden Kanäle, wobei die Druckfestigkeit nach ASTM D695-15 bestimmt ist;
wobei der Schaumkörper sich durch einen Hohlraumanteil von 65 bis 95 Volumenprozent auszeichnet, wobei der Hohlraumanteil nicht die Kanäle durch den Schaumkörper umfasst;
wobei der Schaumkörper ferner umfasst, eine an der ersten Hauptoberfläche angeklebte Klebeschicht und eine Hautschicht, welche an eine Oberfläche der Klebeschicht gegenüber der ersten Hauptoberfläche angeklebt ist;

und

wobei die Hautschicht ein Komposit, umfassend ein Polyetherimid und Glasfasern, umfasst.

**2.** Die Struktur nach Anspruch 1, **dadurch gekennzeichnet, dass** der Schaumkörper Kanäle definiert, welche sich teilweise durch den Schaumkörper erstrecken.

**3.** Die Struktur nach Anspruch 1, **dadurch gekennzeichnet, dass** der Schaumkörper Kanäle definiert, welche sich vollständig durch den Schaumkörper erstrecken.

**4.** Ein Verfahren zur Ausbildung einer verstärkten Schaumstruktur, das Verfahren umfassend:

(a) Ausbilden einer Mehrzahl an Kanälen in einem Schaumkörper zur Bildung eines gewichtsreduzierten Schaumkörpers, welcher sich durch eine Druckfestigkeit auszeichnet, wobei der Schaumkörper ein thermoplastisches Material umfasst und sich von einer ersten Hauptoberfläche zu einer zweiten Hauptoberfläche gegenüber der ersten Hauptoberfläche erstreckt; wobei jeder Kanal sich teilweise oder vollständig durch den Schaumkörper erstreckt; und wobei jeder Kanal durch eine Kanaloberfläche definiert ist; und
(b) Verstärken wenigstens eines Bereichs der Kanaloberflächen zur Bildung einer verstärkten Schaumstruktur, wobei die verstärkte Schaumstruktur durch eine Druckfestigkeit auszeichnet, welche höher ist als eine Druckfestigkeit des gewichtsreduzierten Schaumkörpers vor dem Durchführen des Heizelements durch die Kanäle, wobei die Druckfestigkeit nach ASTM D695-15 bestimmt ist; und wobei der Schaumkörper ein Polyetherimid umfasst; und

der Schaumkörper sich durch einen Hohlraumanteil von 65 bis 95 Volumenprozent auszeichnet, wobei der Hohlraumanteil nicht die Kanäle durch den Schaumkörper umfasst;
wobei die verstärkte Schaumstruktur ferner eine an der ersten Hauptoberfläche angeklebte Klebeschicht und eine Hautschicht, welche an eine Oberfläche der Klebeschicht gegenüber der ersten Hauptoberfläche angeklebt ist, umfasst; und wobei die Hautschicht ein Komposit, umfassend ein Polyetherimid und Glasfasern, umfasst; und
das besagte Verstärken wenigstens eines Bereichs der Kanaloberflächen ein Durchführen eines Heizelements durch die Kanäle, welche durch den wenigstens einen Bereich der Kanaloberflächen definiert sind, umfasst.

**5.** Ein Gegenstand, umfassend eine Struktur nach einem der Ansprüche 1 bis 3.

## Revendications

**1.** Structure comprenant:

un corps en mousse comprenant une mousse thermoplastique comprenant un polyétherimide, dans laquelle le corps en mousse comprend une première surface principale et une seconde surface principale opposée à la première surface principale ;
dans laquelle la première surface principale et la seconde surface principale définissent chacune indépendamment une pluralité d'ouvertures, le corps en mousse définissant des canaux s'étendant partiellement ou totalement à travers le corps en mousse, chaque canal s'étendant depuis une ouverture dans la première surface principale, une ouverture dans la seconde surface principale, ou une paire d'ouvertures, une dans la première surface principale et l'autre dans la seconde surface principale ;
dans laquelle au moins une partie des canaux comprennent une surface de canal faisant face vers l'intérieur renforcée en faisant passer un élément chauffant à travers les canaux comprenant la surface de canal faisant face vers l'intérieur ;
dans laquelle la structure est **caractérisée par** une résistance à la compression supérieure à une résistance à la compression de la structure avant de faire passer l'élément chauffant à travers les canaux comprenant la surface de canal faisant face vers l'intérieur, dans laquelle la résistance à la compression est déterminée selon ASTM D695-15 ;
dans laquelle le corps en mousse est **caractérisé par** une teneur en vides de 65 à 95 % en volume, dans laquelle la teneur en vides n'inclut pas les canaux à travers le corps en mousse ;
le corps en mousse comprend en outre une couche adhésive qui adhère à la première surface principale, et une couche externe qui adhère à une surface de la couche adhésive opposée à la première surface principale ; et
la couche externe comprend un composite comprenant un polyétherimide et des fibres de verre.

**2.** Structure selon la revendication 1, dans laquelle le corps en mousse définit des canaux s'étendant partiellement à travers le corps en mousse.

**3.** Structure selon la revendication 1, dans laquelle le corps en mousse définit des canaux s'étendant totalement à travers le corps en mousse.

**4.** Procédé de formation d'une structure renforcée en mousse, le procédé comprenant :

(a) la formation d'une pluralité de canaux à l'intérieur d'un corps en mousse pour former un corps en mousse de poids réduit **caractérisé par** une résistance à la compression, le corps en mousse comprenant un matériau thermoplastique et s'étendant depuis une première surface principale jusqu'à une seconde surface principale opposée à la première surface principale ; dans lequel chaque canal s'étend partiellement ou totalement à travers le corps en mousse ; et dans lequel chaque canal est défini par une surface de canal : et
(b) le renforcement d'au moins une partie des surfaces des canaux pour former une structure renforcée en mousse,

dans lequel la structure renforcée en mousse est **caractérisée par** une résistance à la compression supérieure à la résistance à la compression du corps en mousse de poids réduit avant de faire passer l'élément chauffant à travers les canaux, dans lequel la résistance à la compression est déterminée selon ASTM D695-15 ; et
dans lequel
le corps en mousse comprend un polyétherimide ;
le corps en mousse est **caractérisé par** une teneur en vides de 65 à 95 % en volume, dans lequel la teneur en vides n'inclut pas les canaux à travers le corps en mousse ;
la structure renforcée en mousse comprend en outre une couche adhésive qui adhère à la première surface principale, et une couche externe qui adhère à une surface de la couche adhésive opposée à la première surface principale ;
la couche externe comprend un composite comprenant un polyétherimide et des fibres de verre ; et
ledit renforcement d'au moins une partie des surfaces des canaux comprend le passage d'un élément chauffant à travers les canaux définis par la au moins une partie des surfaces des canaux.

**5.** Article comprenant la structure selon l'une quelconque des revendications 1 à 3.

FIG. 1A

FIG. 1C

FIG. 1B

FIG. 2

FIG. 3

FIG. 4

EP 3 394 157 B1

FIG. 5A

FIG. 5B

FIG. 5B

600

```
        ┌─────────────┐
        │    Start    │
        └─────────────┘
               │
               ▼
    ┌──────────────────────┐
    │  Form Foam Structure │──── S602
    │         from         │
    │ Thermoplastic Material│
    └──────────────────────┘
               │
               ▼
    ┌──────────────────────┐
    │   Form Pattern in Foam│──── S604
    │       Structure      │
    └──────────────────────┘
               │
               ▼
    ┌ ─ ─ ─ ─ ─ ─ ─ ─ ─ ─ ┐
    │  Modify Thickness of │──── S606
    │     Foam Structure   │
    └ ─ ─ ─ ─ ─ ─ ─ ─ ─ ─ ┘
               │
               ▼
    ┌──────────────────────┐
    │    Reinforce Foam    │──── S608
    │       Structure      │
    └──────────────────────┘
               │
               ▼
    ┌──────────────────────┐
    │ Laminate/Adhere Skin to│──── S610
    │  Foam Structure to Form│
    │         Panel         │
    └──────────────────────┘
               │
               ▼
    ┌──────────────────────┐
    │  Form Desired Shape  │──── S612
    │      from Panel      │
    └──────────────────────┘
               │
               ▼
        ┌─────────────┐
        │     End     │
        └─────────────┘
```

# FIG. 6

700

```
           ┌─────────────┐
           │    Start     │
           └─────────────┘
                  │
                  ▼
        ┌──────────────────┐
        │ Form Foam Structure │ ──── S702
        │       from          │
        │ Thermoplastic Material │
        └──────────────────┘
                  │
                  ▼
        ┌──────────────────┐
        │ Form Pattern and    │ ──── S704
        │    Reinforce        │
        │  Foam Structure     │
        └──────────────────┘
                  │
                  ▼
        ┌──────────────────┐
        │ Modify Thickness of │ ──── S706
        │   Foam Structure    │
        └──────────────────┘
                  │
                  ▼
        ┌──────────────────┐
        │ Laminate/Adhere Skin to │ ──── S708
        │ Foam Structure to Form  │
        │        Panel            │
        └──────────────────┘
                  │
                  ▼
        ┌──────────────────┐
        │ Form Desired Shape  │ ──── S710
        │     from Panel      │
        └──────────────────┘
                  │
                  ▼
           ┌─────────────┐
           │     End      │
           └─────────────┘
```

FIG. 7

FIG. 8

800

FIG. 9

FIG. 10

EP 3 394 157 B1

*Fig. 11*

Fig. 12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2014283941 A
- US 4898763 A

- WO 2015147973 A